# EUROPÄISCHE PATENTANMELDUNG

(11) **EP 0 993 188 A2**
(43) Veröffentlichungstag der Anmeldung: **12.04.2000**
(21) Anmeldenummer: 99119374.9
(22) Anmeldetag: 29.09.1999
(51) Int. Cl.: H04N 5/76

(54) **Verfahren und Vorrichtung zur Unterdrückung einer vorbestimmten Sendung**

(30) Priorität: 07.10.1998 DE 19846249
(71) Anmelder: Fraunhofer-Gesellschaft zur Förderung der angewandten Forschung e.V., 80636 München (DE)
(72) Erfinder: Wagner, Thomas, Dr., 91054 Erlangen (DE); Heuberger, Albert, 91056 Erlangen (DE); Plankenbühler, Roland, Dr., 90475 Nürnberg (DE); Popp, Harald, 90587 Tuchenbach (DE); Gerhäuser, Heinz, Dr., 91344 Waischenfeld (DE); Dietz, Martin, 90408 Nürnberg (DE)
(74) Vertreter: Schoppe, Fritz, Dipl.-Ing.

(57) **Zusammenfassung**

Bei einer Vorrichtung und einem Verfahren zur Unterdrückung einer vorbestimmten Sendung in einem laufenden Fernseh- oder Rundfunkprogramm wird ein Fernseh- oder Rundfunkprogramm zunächst empfangen und dann einem Zwischenspeicher (12) zugeführt, wobei ansprechend auf ein Steuersignal (16), das die vorbestimmte Sendung identifiziert, lediglich das empfangene Fernseh- oder Rundfunkprogramm ohne die vorbestimmte Sendung zwischengespeichert wird. Das zwischengespeicherte Fernseh- oder Rundfunkprogramm, das die vorbestimmte Sendung nicht mehr aufweist, wird schließlich einem Fernseher (14) oder einem Radiogerät (14) zugeführt. Das Auslesen des Zwischenspeichers (12) findet zeitversetzt zum Beschreiben des Zwischenspeichers (12) statt, derart, daß das zwischengespeicherte Fernseh- oder Rundfunkprogramm zur Wiedergabe bereitgestellt wird, während ein späterer Teil des empfangenen Fernseh- oder Rundfunkprogramms zwischengespeichert wird, und während ansprechend auf das Steuersignal (16) die vorbestimmte Sendung unterdrückt wird. Somit ist es möglich, beispielsweise ein Fernsehprogramm ohne Werbeeinblendungen und ohne durch Werbeeinblendungen verursachte Unterbrechungen zu betrachten.

## Beschreibung

Die vorliegende Erfindung bezieht sich auf Fernseh- und Rundfunksysteme und insbesondere auf eine Vorrichtung und ein Verfahren zur Unterdrückung einer vorbestimmten Sendung in einem laufenden Fernseh- oder Rundfunkprogramm.

Bestimmte Sendungen in Fernseh- oder Rundfunkprogrammen werden für bestimmte Anwender zumeist als störend empfunden. Insbesondere ist dabei an Werbeeinblendungen in Fernsehprogrammen und an Verkehrsnachrichten in Rundfunkprogrammen zu denken.

Eine grundsätzliche Lösung insbesondere zum Unterdrücken von Werbeeinblendungen besteht prinzipiell darin, beispielsweise einen Spielfilm oder eine Sportübertragung vollständig auf einen Videorecorder aufzuzeichnen und dann anhand der aufgezeichneten Sendung die Werbeeinblendungen herauszuschneiden, um nach dieser Nachbearbeitung der gespeicherten Sendung in den vollen Genuß einer Fernsehsendung ohne Werbepausen zu kommen. Nachteilig an diesem Verfahren ist die Tatsache, daß die Person, die die Videoaufzeichnung nachbearbeiten muß, einen erhöhten Aufwand an Geräten zum Schneiden der Videoaufzeichnung und darüber hinaus viel Zeit benötigt.

Eine weitere manuelle Möglichkeit besteht darin, das Aufzeichnen durch den Videorecorder immer dann anzuhalten, wenn ein Werbeblock beginnt, und wieder fortzusetzen, wenn der Werbeblock zu Ende ist. Im Gegensatz zur vorigen Lösung besteht hier der Nachteil, daß die Bedienperson des Videorecorders ständig neben dem Videorecorder sitzen muß, um denselben an- bzw. auszuschalten. Dafür entfällt der Aufwand der Nachbearbeitung.

Das U. S. Patent 5,485,219 schlägt eine Verbesserung dieses Verfahrens vor. Eine Zentrale überwacht Fernsehsendungen und übermittelt Steuer- und Informationsnachrichten an Empfänger, die bei den Benutzern zu Hause stehen. Die Informationsnachrichten umfassen eine Programmtabelle und Steuerdaten für Videorecorder. Ein Prozessor, der die Nachrichten empfängt, wird das Aufzeichnen anhalten, wenn eine identifizierte Sendung, wie z. B. eine Werbeeinblendung, beginnt und die Aufzeichnung wieder aufnehmen, wenn die Werbeeinblendung zu Ende ist.

Eine weitere Möglichkeit die zum Identifizieren von unerwünschtem Programmaterial existiert, ist in dem U. S. Patent Nr. 5,446,488 offenbart. Dabei werden Fernsehprogramme, die durch Werbeeinblendungen unterbrochen sind, über übliche Fernsehkanäle übertragen. Darüberhinaus wird ein verschlüsseltes Identifikationssignal übertragen, das durch einen autorisierten Betrachter empfangen und entschlüsselt werden kann, damit derselbe Programmidentifikationsinformationen erhält. Um diese Dienstleistung abrechnen zu können, erhält jeder autorisierte Betrachter einen Guthabenspeicher, in dem sein aktuelles Guthaben gespeichert ist. Wenn ein Benutzer ein Guthaben hat, kann er das verschlüsselte Signal entschlüsseln und so Programmidentifikationsinformationen erhalten und möglicherweise editieren.

Das U. S. Patent 5,343,251 beschreibt ein Verfahren zur automatischen Detektion von Werbung während eines Videofilms, das zur Unterscheidung von üblichen Fernsehprogrammen und Werbeeinblendungen bestimmte Strukturen der Sendeinhalte klassifiziert und ferner bezüglich neuer Werbeeinblendungen lernfähig ist.

Das U. S. Patent 5,668,917 schließlich liefert eine Identifikation von Werbung gegenüber sonstigen Werbeprogramminhalten, in dem berücksichtigt wird, daß Werbesendungen wiederholt viele Male pro Tag übertragen werden. Basierend auf der häufigen Wiederholung von Werbesendungen im Gegensatz zu sonstigen Fernsehsendungen, die sich nicht mehrmals pro Tag wiederholen, wird direkt aus dem empfangenen Fernsehprogramm eine Identifikation von Werbesendungen gewonnen.

Nachteilig am Stand der Technik ist die Tatsache, daß keine "Echtzeitunterdrückung" von Werbesendungen beschrieben ist, derart, daß nicht, wie beim selektiven Videoaufzeichnen, auf das Ende der Sendung gewartet werden muß, bis dieselbe betrachtet bzw. gehört werden kann. Ein weiterer Nachteil der bekannten Systeme und Verfahren besteht darin, daß, auch wenn die Werbung basierend auf einem Identifikationssignal ausgeblendet wird, dennoch Unterbrechungen für den Benutzer verbleiben, derart, daß derselbe zwar nicht die Werbungen betrachten muß, jedoch dennoch eine Unterbrechung der Sendung, die der Länge der Werbung entspricht, hinnehmen muß.

Die Aufgabe der vorliegenden Erfindung besteht darin, ein Konzept zu schaffen, durch das ein Fernseh- oder Rundfunkprogramm bereits während der Ausstrahlung desselben ohne Werbesendungen und dergleichen und ohne dadurch bewirkte Unterbrechungen betrachtet werden kann.

Diese Aufgabe wird durch eine Vorrichtung und ein Verfahren zur Unterdrückung einer vorbestimmten Sendung nach Anspruch 1, 2, 3 bzw. 20, 21, 22 gelöst.

Gemäß einem ersten Aspekt wird gemäß der vorliegenden Erfindung ein Zwischenspeicher eingesetzt, der ein gleichzeitiges Abspeichern der Sendung ohne eine vorbestimmte Sendung, die durch ein Steuersignal identifiziert wird, und ein Auslesen der gespeicherten Sendung, d. h. des gespeicherten Fernseh- oder Rundfunkprogramms erlaubt. Das Fernseh- oder Rundfunkprogramm wird für den Betrachter gewissermaßen zeitversetzt wiedergegeben. Damit ist es im Gegensatz zu einem Videorecorder möglich, das Programm noch während der Ausstrahlung desselben zu betrachten.

Der Benutzer schaltet bei einem bevorzugten Ausführungsbeispiel der vorliegenden Erfindung seinen Fernseher bzw. Hörfunkempfänger nicht direkt bei Sendebeginn ein, sondern wartet eine gewisse Zeit, die der Gesamtzeit der ausgestrahlten Werbeblöcke entspricht. Wenn eine Sendung beispielsweise um 20.15 Uhr beginnt und um 22.00 Uhr endet, und wenn drei Werbeblöcke à 5 Minuten zu erwarten sind, sollte ein Benutzer um etwa 20.30 Uhr damit beginnen, die Wiedergabe des Programms zu starten. Startet er zu früh mit der Wiedergabe, kann es vorkommen, daß er gegen Ende der Sendung in den Werbepausen warten muß. Wird dagegen zu spät mit der Wiedergabe begonnen, erfährt der Benutzer davon nichts, solange der Zwischenspeicher groß genug ist. In den Zwischenspeicher werden mit Hilfe eines Steuersignals, das die vorbestimmte Sendung, d. h. einen Werbeblock, identifiziert, nur die "echten" Fernseh- oder Rundfunkprogramme abgespeichert. Die Werbung wird dagegen verworfen oder ausgefiltert.

Ein weiterer Vorteil der Benutzung eines Zwischenspeichers besteht darin, daß ein Benutzer manuell die Wiedergabe anhalten kann, wodurch die Wiedergabe des Programms, jedoch nicht die Aufnahme des Programms kurz unterbrochen wird. Damit wird es dem Benutzer ermöglicht, den Raum zu verlassen, ohne etwas von der Sendung zu versäumen, was auch als "Toilettenpause" bezeichnet wird.

Vorzugsweise führt der Benutzer oder die erfindungsgemäße Vorrichtung eine Abschätzung durch, wie lange die Werbung in einem Programm dauern wird, um nach dieser Zeitspanne mit dem Betrachten der Sendung zu beginnen. Im Falle einer Toilettenpause beispielsweise am Beginn einer Sendung ist dies jedoch nicht nötig, da sich der Zwischenspeicher während dieser Unterbrechung füllen wird. Im Gegensatz zu einer Toilettenpause während eines Werbeblocks, wie es bisher üblich war, kann der Benutzer durch die vorliegende Erfindung den Zeitpunkt der Toilettenpause nach seinem freien Belieben wählen.

Gemäß einem zweiten Aspekt wird entsprechend der vorliegenden Erfindung ein Zwischenspeicher eingesetzt, der ein gleichzeitiges Abspeichern der Sendung mit der vorbestimmten Sendung und ein Auslesen der gespeicherten Sendung, d.h. des gepeicherten Fernseh- oder Rundfunkprogramms erlaubt, wobei beim Auslesen der gespeicherten Sendung, d.h. des gespeicherten Fernseh- oder Rundfunkprogramms, ansprechend auf ein Steuersignal, das die vorbestimmte Sendung identifiziert, lediglich das empfangene Fernseh- oder Rundfunkprogramm ohne die vorbestimmte Sendung wiedergegeben wird. Hier wird, ebenso wie beim ersten Aspekt, das Fernseh- oder Rundfunkprogramm für den Betrachter zeitversetzt wiedergegeben, und somit ist es im Gegensatz zu einem Videorekorder auch hier möglich, das Programm noch während der Ausstrahlung desselben zu betrachten.

Gemäß einem dritten Aspekt wird erfindungsgemäß ein Zwischenspeicher eingesetzt, der ein gleichzeitiges Abspeichern der Sendung mit einer vorbestimmten Sendung und ein Auslesen der gepeicherten Sendung, d.h. des gespeicherten Fernseh- oder Rundfunkprogramms, erlaubt, wobei ansprechend auf ein Steuersignal, das ein Benutzer bereitstellt und das die vorbestimmte Sendung identifiziert, die Wiedergabe der vorbestimmten Sendung gesteuert wird. Auch hier wird, wie gemäß dem ersten Aspekt, das Fernseh- oder Rundfunkprogramm für den Betrachter zeitversetzt wiedergegeben und damit wird es im Gegensatz zu einem Videorekorder ermöglicht, das Programm noch während der Ausstrahlung desselben zu betrachten.

Gemäß einem bevorzugten Ausführungsbeispiel nach dem dritten Aspekt der vorliegenden Erfindung wird abhängig von dem durch den Benutzer bereitgestellten Steuersignal die Wiedergabe der vorbestimmten Sendung, wie z.B. der Werbesendung, übersprungen, d.h. in dem Zwischenspeicher wird der Bereich übersprungen, in dem die entsprechenden Daten der vorbestimmten Sendung abgelegt sind, oder die Wiedergabe der vorbestimmten Sendung kann durch das Steuersignal beschleunigt werden, indem beispielsweise anstelle der normalen Bildwiedergaberate eine erhöhte Bildwiedergaberate der in dem Zwischenspeicher abgelegten Bilder erfolgt, bis durch den Benutzer das Steuersignal nicht mehr angelegt wird, nachdem dieser visuell erkannt hat, daß die vorbestimmte Sendung innerhalb des erwünschten Rundfunk- oder Fernsehprogramms beendet ist.

Bevorzugte Ausführungsbeispiele der vorliegenden Erfindung werden nachfolgend bezugnehmend auf die beiliegenden Zeichnungen detaillierter erläutert. Es zeigen:
- Fig. 1: ein Übersichts-Blockschaltbild der erfindungsgemäßen Vorrichtung;
- Fig. 2: eine detaillierter Darstellung der Zwischenspeichereinrichtung von Fig. 1; und
- Fig. 3: ein weiteres Ausführungsbeispiel der erfindungsgemäßen Vorrichtung.

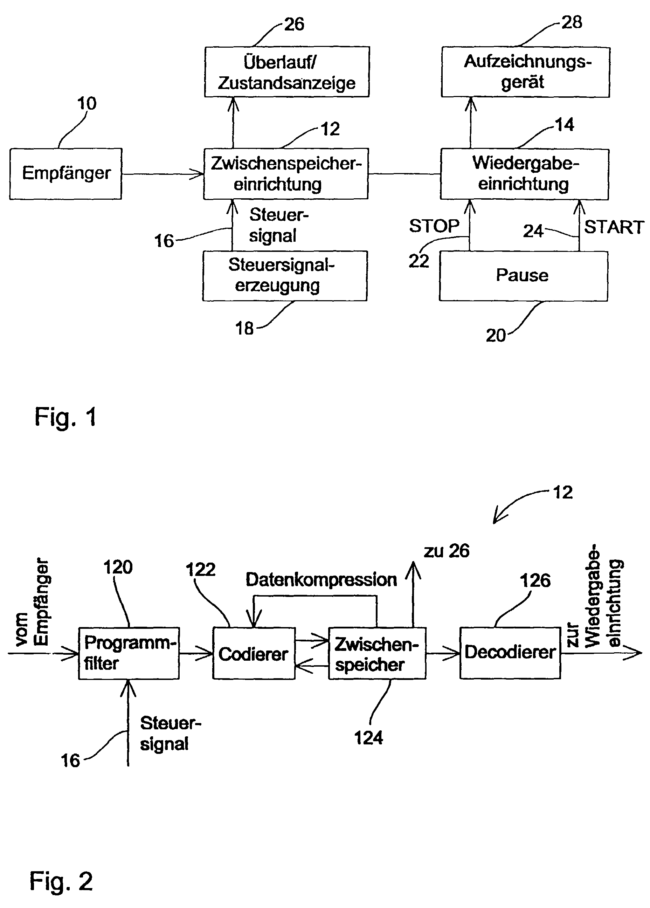

Die in Fig. 1 gezeigte erfindungsgemäße Vorrichtung umfaßt einen Empfänger 10, der mit einer Zwischenspeichereinrichtung 12 gekoppelt ist. Die Zwischenspeichereinrichtung 12 ist wiederum mit einer Wiedergabeeinrichtung 14 verbunden. Die Zwischenspeichereinrichtung 12 wird durch ein Steuersignal 16 gesteuert, das die vorbestimmte Sendung, die zu unterdrücken ist, identifiziert. Das Steuersignal wird durch eine Steuersignalerzeugungseinrichtung 18 erzeugt, wie es weiter hinten detailliert ausgeführt wird. Eine Pauseeinrichtung 20 ist mit der Wiedereingabeeinrichtung 14 wirksam gekoppelt, um derselben ein Stopp-Signal 22 zuzuführen, derart, daß die Wiedergabe des Zwischenspeicherinhalts angehalten wird, um einem Benutzer beispielsweise eine Toilettenpause und dergleichen zu ermöglichen. Hat der Benutzer die Toilettenpause beendet, so kann er über die Pauseeinrichtung 20 der Wiedereingabeeinrichtung 14 wieder ein Start-Signal 24 zuführen, durch das die Wiedergabe fortgesetzt wird.

Die Zwischenspeichereinrichtung 12 ist vorzugsweise mit einer Überlauf/Zustandsanzeige 26 wirksam verbunden, durch die ein Benutzer den aktuellen Speicherzustand des Zwischenspeichers, d. h. wie viele Sendeminuten gespeichert sind bzw. wie viele Sendeminuten noch gespeichert werden können, abrufen. Weiterhin erlaubt die Überlauf/Zustandsanzeige 26 eine vorzugsweise optische und akustische Anzeige, daß der Zwischenspeicher, der in der Zwischenspeichereinrichtung 12 vorhanden ist, bald überläuft. Besonders eine akustische Anzeige erlaubt es dem Benutzer, der sich gerade auf der Toilette befindet oder etwas anderes erledigt, zur Kenntnis zu nehmen, daß der Zwischenspeicher bald überläuft und er sich daher beeilen muß. Lediglich optional ist die Wiedergabeeinrichtung 14 ferner mit einem Aufzeichnungsgerät 28 in Form eines Videorecorders bzw. eines Tonbands verbunden, um neben der gewissermaßen Echtzeit-Betrachtung, die nur minimal zeitversetzt zur Ausstrahlung stattfindet, auch eine Videoaufzeichnung bzw. Tonbandaufzeichnung ohne die vorbestimmte Sendung zu erhalten.

Wie es bereits ausgeführt worden ist, kann die vorbestimmte Sendung eine Werbeeinblendung in einem Fernsehprogramm oder einem Rundfunkprogramm sein. Die vorbestimmte Sendung könnte jedoch ebenfalls eine Verkehrsinformation in einem Radioprogramm oder etwas ähnliches sein.

Fig. 2 zeigt eine detailliertere Darstellung der Zwischenspeichereinrichtung 12. Die Zwischenspeichereinrichtung 12 umfaßt zunächst einen Programmfilter 120, das mit dem Empfänger (Fig. 1) in Verbindung steht und das das Steuersignal 16 zugeführt bekommt. Im einfachsten Fall wirkt das Programmfilter derart, daß, wenn das Steuersignal 16 eine vorbestimmte Sendung identifiziert, die Daten der vorbestimmten Sendung im Programmfilter 120 verworfen werden, während lediglich die Daten des eigentlichen Fernseh- oder Rundfunkprogramms über das Programmfilter 120 zu einem vorzugsweise vorhandenem Codierer 122 weitergeleitet werden.

Der Codierer 122 ist dann von Vorteil, wenn die Kapazität eines Zwischenspeichers 124, der dem Codierer 122 nachgeschaltet ist, beispielsweise aus Kosten- oder Platzgründen nicht hoch genug ausgelegt werden kann. In diesem Fall kann der Codierer 122, der beispielsweise nach einem MPEG-Standard arbeitet, eine circa 40-fache Kompression des Fernseh- oder Rundfunkprogramms am Ausgang des Empfängers 10 (Fig. 1) bewirken. Die codierten Daten werden dann in den Zwischenspeicher 124 eingelesen, der zeitversetzt die zwischengespeicherten Daten an einen Decodierer 126 ausgibt, damit sie zu der Wiedereingabeeinrichtung 14 übertragen werden können, die beispielsweise ein Fernsehgerät, ein Radiogerät oder ein Videogerät sein kann.

Wird im Zwischenspeicher 124 festgestellt, daß ein Speicherüberlauf droht, so kann derselbe, wenn er eingangsseitig mit dem Codierer 122 gekoppelt ist, denselben derart ansteuern, daß eine noch höhere Datenkompression durch den Codierer 122 entweder des aktuell zu codierenden Programms vom Programmfilter 120 oder des bereits im Zwischenspeicher gespeicherten Programms durchgeführt wird, um auf Kosten der Qualität des Fernseh- oder Rundfunkprogramms einen Überlauf des Zwischenspeichers 124 zu vermeiden.

Im nachfolgenden wird auf den Betrieb der in den Figuren 1 und 2 dargestellten Vorrichtungen eingegangen. Die erfindungsgemäße Vorrichtung erhält als Eingangssignal Fernseh- oder Rundfunkprogramme über den Empfänger 10. Um die Signale im Zwischenspeicher 124 bzw. in der Zwischenspeichereinrichtung 12 zwischenspeichern zu können, werden sie, wie es bereits ausgeführt wurde, durch den Codierer 122 vorzugsweise in ihrem Volumen komprimiert. Auf diese Art und Weise lassen sich beispielsweise normale Fernsehprogramme, die einen Informationsgehalt von ca. 20 Mbyte pro Sekunde haben praktisch ohne sichtbaren Qualitätsverlust auf ca. 0,5 Mbyte pro Sekunde komprimieren, was einem Komprimierungsfaktor von 40 entspricht. Solche Kompressionsraten sind mit verfügbaren MPEG-Codierern möglich. Es können jedoch auch preisgünstigere aber auch wesentlich weniger leistungsfähigere Codierer eingesetzt werden, falls genug Zwischenspeicherkapazität vorhanden ist.

Der Zwischenspeicher 124 kann als ein- oder mehrstufiger Speicher ausgeführt sein, um das Fernseh- oder Rundfunkprogramm, das bereits durch das Programmfilter 120 in Verbindung mit dem Steuersignal 16 von der vorbestimmten Sendung befreit worden ist, zwischenzuspeichern. Der Zwischenspeicher ist beispielsweise nach dem FIFO-Prinzip organisiert.

Wenn der Zwischenspeicher 124 ein einstufiger Speicher ist, besteht derselbe vorzugsweise nur aus einem DRAM-Speicherbauteil oder nur aus einer Festplatte eines Personalcomputers. Mehrstufige Speicher, die langsame speichervolumenreiche kostengünstige Medien, wie z. B. Festplatten welche ungleichmäßig hohe Übertragungsraten aufweisen können, mit schnellen, teuren und speichervolumenarmen Medien, die Speicherchips haben, verbinden, werden jedoch bevorzugt. Solche mehrstufigen Speicherkonzepte für den Zwischenspeicher 124 werden auch als Caching-Systeme bezeichnet.

Wie es aus Fig. 1 ersichtlich ist, wird die Zwischenspeichereinrichtung 12 von der Steuersignalerzeugungseinrichtung 18 angesteuert, wobei das Steuersignal 16 die vorbestimmte Sendung identifiziert und dadurch den aktuell vorliegenden Programminhalt charakterisiert, d. h. ob ein Fernseh- oder Rundfunkprogramm oder die vorbestimmte Sendung, z. B. eine Werbung, vorliegt. Die Wiedergabeeinrichtung 14 wird vorzugsweise von der Pauseeinrichtung 20 gesteuert, um Benutzerwünschen, wie z. B. eine Wiedergabeunterbrechung, zu realisieren. Obwohl die Pauseeinrichtung 20 in Fig. 1 derart dargestellt ist, daß sie mit der Wiedereingabeeinrichtung 14 verbunden ist, könnte sie auch mit dem Decodierer 126 der Zwischenspeichereinrichtung 12 oder mit einer Zwischenspeicherausgangsstufe (nicht gezeigt) verbunden sein, um das Auslesen aus dem Zwischenspeicher 124 auf irgendeine Art und Weise zu unterbrechen.

Solange ein Fernseh- oder Rundfunkprogramm läuft, werden gleichzeitig Programminformationen in den Speicher 124 eingeschrieben und andere, bereits vorher zwischengespeicherte Informationen aus dem Speicher ausgelesen. Während einer Werbeeinblendung aktiviert das Steuersignal 16 das Programmfilter 120, derart, daß der Aufnahmevorgang im Speicher unterbrochen wird. Die Unterbrechung der Aufzeichnung durch den Zwischenspeicher 124 hat jedoch keine Auswirkung auf die Wiedergabe des bereits aufgenommenen Programms. Auch bei einer Aktivierung des Stopp-Signals 22 wird der Aufnahmevorgang, d. h. das Zwischenspeichern, eines Fernseh- oder Rundfunkprogramms nicht beeinträchtigt.

Im nachfolgenden wird auf den Betrieb der Steuersignalerzeugungseinrichtung 18 eingegangen, um das Steuersignal 16 zu erhalten, das die vorbestimmte Sendung, z. B. eine Werbeeinblendung, identifiziert.

Zunächst kann das Steuersignal 16 selbst oder ein ähnliches Signal, aus dem das Steuersignal abgeleitet werden kann, als Zusatzsignal zum eigentlichen Fernseh- oder Hörfunkprogramm ähnlich der Verkehrsfunkkennung im Radio übertragen werden. Dieses Zusatzsignal wird vom Programmanbieter mitgeliefert und von der Steuersignalerzeugungseinrichtung 18 aus dem Fernseh- oder Rundfunkprogramm vorzugsweise in dem Programmfilter 120 (Fig. 2) extrahiert. Weiterhin besteht die Möglichkeit, daß ein Signal, das eine Werbesendung identifiziert, als ein auf einer anderen Frequenz ausgestrahltes Zusatzsignal als separater und unter Umständen kostenpflichtiger Zusatzdienst geliefert wird. Eine Möglichkeit dafür besteht darin, daß ein Dienstleister permanent die Programme ansieht, und z. B. manuell ein geeignetes Zusatzsignal (Werbung beginnt, Werbung endet) erzeugt. Vorteilhafterweise wird ein solches Signal über Langwelle ausgestrahlt, da in diesem Frequenzbereich sehr wenige Sendeeinrichtungen sehr große Gebiete abdecken können.

Ein solches Zusatzsignal kann jedoch auch über das Internet oder andere Datendienste, wie z. B. ISDN, bereitgestellt werden oder auch als Rundsteuersignal über Stromleitungen der Steuersignalerzeugungseinrichtung 18 zugeführt werden.

Das Zusatzsignal, aus dem das Steuersignal 16 abgeleitet bzw. gewonnen wird, kann also leitungsgebunden, elektromagnetisch oder optisch übertragen werden und aus Rundfunk- oder Fernsehdiensten oder aus Datendiensten stammen. Ebenso besteht die Möglichkeit, Daten zur zeitlichen Abfolge von Werbung und Programm im Vorfeld abzuspeichern und diesen Zeitplan in der Steuersignalerzeugungseinrichtung 18 zu speichern.

Noch eine weitere Möglichkeit zur Erzeugung des Steuersignals 16 besteht darin, in der Steuersignalerzeugungseinrichtung 18 feste Werbezeiten anzunehmen, und das Steuersignal 16 aus einer eingebauten Uhr abzuleiten. Dieses Verfahren ist besonders einfach und effektiv, wenn feste Werbezeiten in den einzelnen Kanälen vorhanden sind, wie z. B. eine Werbung zwischen 20.25 Uhr und 20.26 Uhr.

Schließlich kann die Steuersignalerzeugungseinrichtung 18 direkt mit dem Fernseh- oder Rundfunkprogramm versorgt werden, um mittels Bild- bzw. Audiosignalverarbeitung automatisch und selbsttätig vorbestimmte Sendungen in einem laufenden Fernseh- oder Rundfunkprogramm zu erkennen, derart, daß dieselben unterdrückt werden können.

Sobald der Zwischenspeicher 124 leer zu werden droht, d. h. daß kein anzeigbares Programm mehr in demselben vorhanden ist, weil mehr Werbeblöcke als erwartet das Programm unterbrochen haben, oder weil der Benutzer zu früh damit begonnen hat, die Wiedergabe zu beginnen, kann das Steuersignal 16 unterdrückt werden, derart, daß die Werbung ungefiltert durchgelassen wird, um eine Zwischenspeichererschöpfung zu verhindern. Alternativ kann der Empfänger 10 aktiviert werden, daß auf andere Programmkanäle oder Daten, wie z. B. Videotext oder einen Videofilm u.ä. umgeschaltet wird. Optional können die durch die Wiedergabeeinrichtung 14 angezeigten Daten parallel auch auf ein Permanentmedium aufgezeichnet werden, wie z. B. mittels eines Videorecorders, eines Tonbandgeräts, einer Videodisk und dergleichen, um beispielsweise einen werbungsunterbrechungsfreien Spielfilm für die eigene Videothek zu erhalten.

Für Fachleute ist es offensichtlich, daß das erfindungsgemäße Konzept sowohl für eine digitale als auch eine analoge Datenübertragung des Fernseh- oder Rundfunkprogramms geeignet ist.

Bezüglich der baulichen Ausführung können die Zwischenspeichereinrichtung 12 und die Steuersignalerzeugungseinrichtung 18 als integriertes Zusatzgerät zwischen Antenne und beispielsweise Fernsehgerät angebracht werden. Alternativ lassen sich dieselben jedoch direkt in neue Fernsehgeräte integrieren. Vorteilhaft ist ein Kombination mit Fernseh-Tuner-Einsteckkarten für Personalcomputer, da sich dort unter Umständen sowohl der Computerspeicher (RAM, Festplatte, Videospeicher und dergleichen) als auch der Hauptprozessor des Personalcomputers direkt nutzen lassen, wodurch bei sehr schnellen Personalcomputern im günstigsten Fall nur eine zusätzliche Software einzuspielen ist oder lediglich die Codierer/Decodiererbausteine 122, 126 als Zusatzhardware auf der Einsteckkarte angebracht sein müssen.

Das vorliegende Konzept versetzt einen Benutzer somit in die Lage, bereits während der Ausstrahlung eines Fernseh- oder Rundfunkprogramms dasselbe ansehen bzw. anhören zu können, ohne daß derselbe in den Genuß einer vorbestimmten Sendung, wie z. B. einer Werbesendung kommt, und ohne daß während der Ausstrahlungszeit der vorbestimmten Sendung eine Unterbrechung auftritt. Ferner erlaubt es das erfindungsgemäße Konzept, die Wiedergabe des Fernseh- oder Rundfunkprogramms, aus dem die vorbestimmte Sendung bereits herausgefiltert worden ist, zu unterbrechen, ohne daß ein Teil des Programms versäumt wird.

In Abweichung von den bislang beschriebenen Ausführungsbeispielen können im Falle der zeitversetzten Mehrfachaussendung des gleichen Films die erfindungsgemäße Vorrichtung sowie das erfindungsgemäße Verfahren verwendet werden, um die sonst erforderliche anfängliche Wartezeit von typischerweise 15 Minuten zu vermeiden, wenn auch bei ausgeschaltetem Fernseher gerade laufende Sendungen im Hintergrund zwischengespeichert werden.

Ebenfalls in Abweichung von den bislang beschriebenen Ausführungsbeispielen können die erfindungsgemäße Vorrichtung sowie das erfindungsgemäße Verfahren derart ausgestaltet sein, daß sie dazu geeignet sind, gleichzeitig mehrere Kanäle zwischenzuspeichern, sodaß der Benutzer bei Ausstrahlungsbeginn eines Films noch nicht entschieden haben muß, ob er diesen Film in diesem Kanal oder lieber einen anderen Film, dessen Übertragung in einem anderen Kanal begann, sehen möchte.

Die erfindungsgemäße Vorrichtung sowie das erfindungsgemäße Verfahren erlauben es der Bedienungsperson ferner, einen soeben gesehenen Film um ein kurzes Stück zurückzuspulen und nochmal anzuschauen.

Die erfindungsgemäße Vorrichtung kann ferner mit einem permanenten Speicher versehen sein. Die erfindungsgemäße Vorrichtung sowie das erfindungsgemäße Verfahren ermöglichen es der Bedienungsperson in diesem Fall, ein kurzes Stück eines soeben gesehenen Film in einen permanenten Speicher zu überführen.

Im vorhergehenden wurde ein erstes Ausführungsbeispiel der vorliegenden Erfindung näher beschrieben, bei dem der Zwischenspeicher ausgebildet ist, um abhängig von dem die Sendung identifizierenden Steuersignal 16 (siehe Fig. 1) das empfangene Fernseh- oder Rundfunkprogramm ohne die vorbestimmte Sendung zwischenzuspeichern.

Bei einem weiteren bevorzugten Ausführungsbeispiel der vorliegenden Erfindung kann die Zwischenspeichereinrichtung 12 derart ausgestaltet sein, daß diese sowohl das empfangene Fernseh- oder Rundfunkprogramm als auch die vorbestimmte Sendung zwischenspeichert. Auf ähnliche Art und Weise wie bei dem anhand von Fig. 1 beschriebenen Ausführungsbeispiel wird auch hier ein Steuersignal 16 von der Zwischenspeichereinrichtung empfangen, das durch eine Steuersignalerzeugung 18 auf die im vorhergehenden beschriebene Art und Weise erzeugt wird. Im Gegensatz zum ersten Ausführungsbeispiel erfolgt jedoch gemäß dem zweiten Ausführungsbeispiel keine selektive Zwischenspeicherung, sondern das empfangene Programm wird vollständig in dem Zwischenspeicher 12, also inklusive der vorbestimmten Sendung, abgelegt, und gleichzeitig werden die entsprechenden Steuersignale empfangen und beispielsweise abgespeichert, um in dem Zwischenspeicher diejenigen Abschnitte kenntlich zu machen, in denen Daten bezüglich der vorbestimmten, zu unterdrückenden Sendung abgelegt sind.

Die zwischengespeicherten Daten werden von der Zwischenspeichereinrichtung 12 an die Wiedergabeeinrichtung 14 weitergegeben, wie dies auch in Fig. 1 dargestellt ist, wobei die Wiedergabeeinrichtung jedoch derart ausgestaltet ist, daß diese ansprechend auf das in den empfangenen Daten enthaltene Steuersignal lediglich das empfangene Fernseh- oder Rundfunkprogramm ohne die vorbestimmte Sendung wiedergibt.

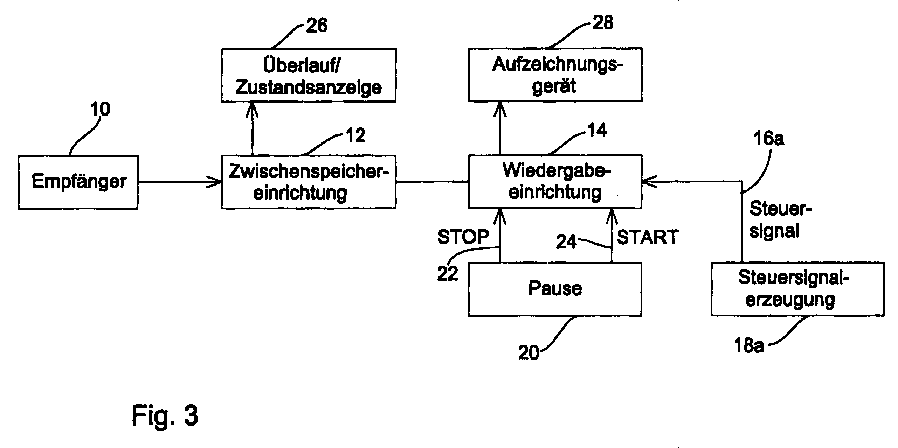

Gemäß einem dritten, bevorzugten Ausführungsbeispiel der vorliegenden Erfindung, das nachfolgend anhand der Fig. 3 näher erläutert wird, erfolgt keine Speicherung bzw. automatische Bereitstellung der Steuersignale, wie bei dem ersten oder zweiten Ausführungsbeispiel, das anhand der Fig. 1 beschrieben wurde. In Fig. 3 sind diejenigen Elemente, die bereits anhand der Fig. 1 beschrieben wurden, mit den gleichen Bezugszeichen versehen und auf eine erneute Beschreibung dieser Elemente wird daher verzichtet. Wie aus Fig. 3 zu erkennen ist, unterscheidet diese sich von dem in Fig. 1 gezeigten Ausführungsbeispiel dahingehend, daß die Zwischenspeichereinrichtung kein Steuersignal empfängt, dieses wird vielmehr durch eine Steuersignalerzeugung 18a an die Wiedergabeeinrichtung 14 weitergegeben.

Wie auch schon in dem vorhergehenden beschriebenen zweiten Ausführungsbeispiel wird beim dritten Ausführungsbeispiel in der Zwischenspeichereinrichtung 12 das vollständige Programm empfangen und gespeichert, also das empfangene Fernseh- oder Rundfunkprogramm mit der vorbestimmten Sendung. Anders als bei den vorhergehenden Ausführungsbeispielen erfolgt die Steuerung hinsichtlich der Unterdrückung der vorbestimmten Sendung jedoch derart, daß durch eine Steuersignalerzeugungseinrichtung 18a ein Steuersignal 16a erzeugt wird, das der Wiedergabeeinrichtung 14 zugeführt wird, die abhängig von dem empfangenen Steuersignal 16a, mittels der die vorbestimmte Sendung identifiziert wird, die Wiedergabe der vorbestimmten Sendung steuert.

Gemäß bevorzugten Ausführungsbeispielen dieses dritten Aspekts der vorliegenden Erfindung wird das Steuersignal durch einen Benutzer, wie z.B. einen Fernsehzuseher oder Hörfunkteilnehmer über eine Fernbedienung oder ähnliches erzeugt, und zwar dann, wenn dieser in dem empfangenen Programm die vorbestimmte Sendung, z.B. die Werbesendung, erkennt. Gemäß der vorliegenden Erfindung kann dann entweder die Wiedergabe der vorbestimmten Sendung übersprungen werden oder es wird eine Art "schneller Suchvorlauf" durchgeführt, bei dem die Wiedergabeeinrichtung 14 derart angesteuert wird, daß bei einer Werbesendung von ca. einer Minute Dauer ein schnelles Vorspulen innerhalb von z.B. sechs Sekunden erfolgt. Dies erfordert eine Beschleunigung der Wiedergabe um den Faktor 10. Die anzuzeigenden Bilder liegen dann in der Originalsequenz 0,4 Sekunden auseinander (bei 25 Bildern pro Sekunde).

Der Vorteil dieser Vorgehensweise besteht darin, daß es nicht erforderlich ist, die in dem ersten und in dem zweiten Ausführungsbeispiel erforderlichen Empfangsvorrichtungen und Sendevorrichtungen zum Einbringen des Steuersignals in das empfangene Fernsehsignal vorzusehen.

Die gerade beschriebenen Ausführungsbeispiele der vorliegenden Erfindung gemäß dem zweiten und dritten Aspekt können selbstverständlich auch gemäß den anhand der ersten Ausführungsbeispiels beschriebenen Abwandlungen realisiert werden.

## Patentansprüche

1. Vorrichtung zur Unterdrückung einer vorbestimmten Sendung in einem laufenden Fernseh- oder Rundfunkprogramm, mit folgenden Merkmalen:
einer Einrichtung (10) zum Empfangen des Fernseh- oder Rundfunkprogramms, das die vorbestimmte Sendung aufweist;
einer Einrichtung (12) zum Zwischenspeichern, die ansprechend auf ein Steuersignal (16), das die vorbestimmte Sendung identifiziert, lediglich das empfangene Fernseh- oder Rundfunkprogramm ohne die vorbestimmte Sendung zwischenspeichert; und
einer Einrichtung (14) zum Wiedergeben des zwischengespeicherten Fernseh- oder Rundfunkprogramms,
wobei die Einrichtung (12) zum Zwischenspeichern derart angeordnet ist, daß das zwischengespeicherte Fernseh- oder Rundfunkprogramm zur Einrichtung (14) zum Wiedergeben geliefert wird, während ein späterer Teil des empfangenen Fernseh- oder Rundfunkprogramms zwischengespeichert wird, und während ansprechend auf das Steuersignal (16) die vorbestimmte Sendung unterdrückt wird.

2. Vorrichtung zur Unterdrückung einer vorbestimmten Sendung in einem laufenden Fernseh- oder Rundfunkprogramm, mit folgenden Merkmalen:
einer Einrichtung (10) zum Empfangen des Fernseh- oder Rundfunkprogramms, das die vorbestimmte Sendung aufweist;
einer Einrichtung (12), die das empfangene Fernseh- oder Rundfunkprogramm mit der vorbestimmten Sendung zwischenspeichert; und
einer Einrichtung (14), die ansprechend auf ein Steuersignal (16), das die vorbestimmte Sendung identifiziert, lediglich das empfangene Fernseh- oder Rundfunkprogramm ohne die vorbestimmte Sendung wiedergibt; und
wobei die Einrichtung (12) zum Zwischenspeichern derart angeordnet ist, daß das zwischengespeicherte Fernseh- oder Rundfunkprogramm zur Einrichtung (14) zum Wiedergeben geliefert wird, während ein späterer Teil des empfangenen Fernseh- oder Rundfunkprogramms zwischengespeichert wird.

3. Vorrichtung zur Unterdrückung einer vorbestimmten Sendung in einem laufenden Fernseh- oder Rundfunkprogramm, mit folgenden Merkmalen:
einer Einrichtung (10) zum Empfangen des Fernseh- oder Rundfunkprogramms, das die vorbestimmte Sendung aufweist;
einer Einrichtung (12), die das empfangene Fernseh- oder Rundfunkprogramm mit der vorbestimmten Sendung zwischenspeichert; und
einer Einrichtung (14) zum Wiedergeben des zwischengespeicherten Fernseh- oder Rundfunkprogramms, die ansprechend auf ein Steuersignal (16a), das durch einen Benutzer bereitgestellt wird und das die vorbestimmte Sendung identifiziert, die Wiedergabe der vorbestimmten Sendung steuert;
wobei die Einrichtung (12) zum Zwischenspeichern derart angeordnet ist, daß das zwischengespeicherte Fernseh- oder Rundfunkprogramm zur Einrichtung (14) zum Wiedergeben geliefert wird, während ein späterer Teil des empfangenen Fernseh- oder Rundfunkprogramms zwischengespeichert wird.

4. Vorrichtung nach Anspruch 3, bei der die Einrichtung (14) zum Wiedergeben angeordnet ist, um ansprechend auf das Steuersignal (16a) die Wiedergabe der vorbestimmten Sendung zu überspringen oder zu beschleunigen.

5. Vorrichtung nach einem der Ansprüche 1 bis 4, bei der die Einrichtung (14) zum Wiedergeben angeordnet ist, um ansprechend auf ein Stopp-Signal (22) die Wiedergabe zu unterbrechen, und um ansprechend auf ein Startsignal die Wiedergabe wieder zu starten, wobei die Einrichtung (12) zum Zwischenspeichern durch das Stopp-Signal (22) nicht angehalten wird.

6. Vorrichtung nach einem der Ansprüche 1 bis 5, bei der die Einrichtung (12) zum Zwischenspeichern ferner folgende Merkmale aufweist:
einen Codierer (122), der angeordnet ist, um das empfangene Fernseh- oder Rundfunkprogramm ohne die vorbestimmte Sendung vor dem Zwischenspeichern zu komprimieren; und
einen Decodierer (126), der angeordnet ist, um das komprimierte Fernseh- und Rundfunkprogramm wieder zu dekomprimieren.

7. Vorrichtung nach Anspruch 6, bei der der Codierer (122) und der Decodierer (126) angeordnet sind, um nach einem MPEG-Standard zu arbeiten.

8. Vorrichtung nach Anspruch 6 oder 7, bei der der Codierer (122) angeordnet ist, um ansprechend auf ein Speicher-Voll-Signal eine stärkere Komprimierung von Programmdaten vor dem Zwischenspeichern oder eine Nachkomprimierung bereits zwischengespeicherter Daten durchzuführen.

9. Vorrichtung nach einem der vorhergehenden Ansprüche, die ferner folgendes Merkmal aufweisen:
eine Einrichtung (26) zum optischen und/oder akustischen Anzeigen eines Überlaufs der Einrichtung (12) zum Zwischenspeichern.

10. Vorrichtung nach einem der vorhergehenden Ansprüche, die ferner folgendes Merkmal aufweist:
eine Einrichtung zum Feststellen eines Speicher-Leer-Zustandes der Einrichtung (12) zum Zwischenspeichern, wobei die Einrichtung (12) zum Zwischenspeichern angeordnet ist, um ansprechend auf einen Speicher-Leer-Zustand auch die vorbestimmte Sendung zwischenzuspeichern, oder die Einrichtung (10) zum Empfangenen auf ein anderes Programm (18) umzuschalten.

11. Vorrichtung nach Anspruch 10, bei der die Einrichtung (10) zum Empfangen angeordnet ist, um als anderes Programm einen anderen Fernseh- oder Rundfunkkanal, ein Videotextsignal oder ein Videorecorderausgangssignal zu empfangen.

12. Vorrichtung nach einem der vorhergehenden Ansprüche, bei der die Einrichtung (14) zum Wiedergeben mit einem Aufzeichnungsgerät (28) gekoppelt ist, um parallel zum Wiedergeben eine permanente Aufzeichnung des zwischengespeicherten Fernseh- oder Rundfunkprogramms zu erzeugen.

13. Vorrichtung nach einem der vorhergehenden Ansprüche, bei der die Zwischenspeichereinrichtung (12) einen Zwischenspeicher (112) aufweist, der einstufig ist und einen DRAM-Speicher oder eine Festplatte enthält.

14. Vorrichtung nach einem der Ansprüche 1 bis 13, bei der die Einrichtung (12) zum Zwischenspeichern einen Zwischenspeicher (124) umfaßt, der mehrstufig ist, wobei eine Stufe ein relativ langsames speichervolumenreiches Speicherelement umfaßt, während eine andere Stufe ein relativ schnelles speichervolumenarmes Speicherelement aufweist.

15. Vorrichtung nach einem der vorhergehenden Ansprüche, die ferner folgendes Merkmal aufweist:
eine Zwischenspeicherzustandsanzeige (26), die angeordnet ist, um eine Anzeige darüber zu liefern, wieviel Sendezeit im Zwischenspeicher aufgenommen ist und/oder wieviel Sendezeit noch gespeichert werden kann.

16. Vorrichtung nach einem der vorhergehenden Ansprüche, die ferner folgende Merkmal aufweist:
eine Einrichtung (18) zum Erzeugen des Steuersignals, das die vorbestimmte Sendung identifiziert.

17. Vorrichtung nach Anspruch 16, bei der die Einrichtung (18) zur Erzeugung des Steuersignals (16) angeordnet ist, um ein Steuersignal aus dem empfangenen Fernseh- oder Rundfunkprogramm zu extrahieren, um das Steuersignal (16) separat vom Fernseh- oder Rundfunkprogramm auf einer anderen Frequenz terrestrisch oder über Telefon- oder Datenleitungen oder Stromleitungen empfangen, um das Steuersignal (16) aus dem Fernseh- oder Rundfunkprogramm mittels Bild- oder Signalverarbeitung zu gewinnen, oder um das Steuersignal (16) aus einer in der Einrichtung (18) fest abgespeicherten Zeit-Programm-Tabelle zu erhalten.

18. Vorrichtung nach einem der vorhergehenden Ansprüche, bei der die Zwischenspeichereinrichtung (12) einen Zwischenspeicher (124) aufweist, der durch einen Arbeitsspeicher und/oder Festwertspeicher eines Personalcomputers realisiert ist, wobei die Einrichtung (10) zum Empfangen als Tuner-Einsteckkarte realisiert ist, und wobei die Steuersignalerzeugungseinrichtung (18) durch einen Hauptprozessor des Personalcomputers realisiert ist.

19. Vorrichtung nach einem der vorhergehenden Ansprüche, bei der die Zwischenspeichereinrichtung (12) zur gleichzeitigen Zwischenspeicherung mehrere Kanäle ausgebildet ist.

20. Verfahren zur Unterdrückung einer vorbestimmten Sendung in einem laufenden Fernseh- oder Rundfunkprogramm, mit folgenden Schritten:
Empfangen der Fernseh- oder Rundfunkprogramms;
ansprechend auf ein Steuersignal (16), das die vorbestimmte Sendung identifiziert, Verwerfen der vorbestimmten Sendung und Zwischenspeichern des restlichen Fernseh- oder Rundfunkprogramms; und
Wiedergeben des zwischengespeicherten Fernseh- oder Rundfunkprogramms,
wobei im Schritt des Zwischenspeicherns das zwischengespeicherte Fernseh- oder Rundfunkprogramm zum Wiedergeben bereitgestellt wird, während ein zeitlich späterer Teil des empfangenen Fernseh- oder Rundfunkprogramms zwischengespeichert wird, und während ansprechend auf das Steuersignal (16) die vorbestimmte Sendung unterdrückt wird.

21. Verfahren zur Unterdrückung einer vorbestimmten Sendung in einem laufenden Fernseh- oder Rundfunkprogramm, mit folgenden Schritten:
Empfangen der Fernseh- oder Rundfunkprogramms;
Zwischenspeichern des restlichen Fernseh- oder Rundfunkprogramms und der vorbestimmten Sendung; und
ansprechend auf ein Steuersignal (16), das die vorbestimmte Sendung identifiziert, Wiedergeben des zwischengespeicherten Fernseh- oder Rundfunkprogramms ohne die vorbestimmte Sendung,
wobei im Schritt des Zwischenspeicherns das zwischengespeicherte Fernseh- oder Rundfunkprogramm zum Wiedergeben bereitgestellt wird, während ein zeitlich späterer Teil des empfangenen Fernseh- oder Rundfunkprogramms zwischengespeichert wird.

22. Verfahren zur Unterdrückung einer vorbestimmten Sendung in einem laufenden Fernseh- oder Rundfunkprogramm, mit folgenden Schritten:
Empfangen der Fernseh- oder Rundfunkprogramms;
Zwischenspeichern des restlichen Fernseh- oder Rundfunkprogramms und der vorbestimmten Sendung;
Wiedergeben des zwischengespeicherten Fernseh- oder Rundfunkprogramms;
ansprechend auf ein durch einen Benutzer bereitgestelltes Steuersignal (16), das die vorbestimmte Sendung identifiziert, Steuern der Wiedergabe der vorbestimmten Sendung;
wobei im Schritt des Zwischenspeicherns das zwischengespeicherte Fernseh- oder Rundfunkprogramm zum Wiedergeben bereitgestellt wird, während ein zeitlich späterer Teil des empfangenen Fernseh- oder Rundfunkprogramms zwischengespeichert wird.

23. Verfahren nach Anspruch 22, bei der ansprechend auf das Steuersignal (16a) die Wiedergabe der vorbestimmten Sendung übersprungen oder zu beschleunigt wird.

24. Verfahren nach einem der Ansprüche 20 bis 23, bei der der Schritt des Zwischenspeicherns ferner folgende Schritte aufweist:
Codieren des empfangenen Fernseh- oder Rundfunkprogramms, nachdem die vorbestimmte Sendung entfernt worden ist; und
Ablegen des komprimierten Fernseh- oder Rundfunkprogramms in einem Zwischenspeicher (124); und
Dekomprimieren des codierten abgelegten Fernseh- oder Rundfunkprogramms, bevor der Schritt des Wiedergebens (14) ausgeführt wird.
